# EUROPEAN PATENT APPLICATION

(11) **EP 4 752 399 A1**
(43) Date of publication of application: **03.06.2026**
(21) Application number: 24216163.6
(22) Date of filing: 28.11.2024
(51) Int. Cl.: F16H 61/70, F16H 61/02, F16H 59/14, F16H 59/62, F16H 59/64, F16H 59/66

(54) **COMPUTER SYSTEM COMPRISING PROCESSING CIRCUITRY CONFIGURED TO CONTROL GEAR SELECTION OF A POWERTRAIN OF A VEHICLE, A POWERTRAIN, A VEHICLE AND A COMPUTER-IMPLEMENTED METHOD**

(71) Applicant: Volvo Truck Corporation, 405 08 Göteborg (SE)
(72) Inventor: Winblad, Hanna, 433 62 Sävedalen (SE); Jakobsson, Samuel, 418 73 Göteborg (SE); Rydquist, Kristoffer, 427 40 Billdal (SE); Svärling, Emma, 417 56 Göteborg (SE); Magnusson, Andreas, 443 92 Lerum (SE)
(74) Representative: Kransell & Wennborg KB

(57) **Abstract**

The disclosure relates to a computer system (600) comprising processing circuitry (602) configured to control gear selection of a powertrain (100) of a vehicle (200), wherein the powertrain (100) comprises a first power unit (110) and a second power unit (120), a shiftable transmission (130) and a range gear arrangement (140), wherein the processing circuitry (602) is further configured to, for a take-off situation of the vehicle (200): - select a first high range gear from a set of high range gears when an achievable acceleration for the first high range gear is equal to or exceeds an acceleration limit. The disclosure also relates to a powertrain (100), a vehicle (200), and a computer-implemented method.

## Description

### TECHNICAL FIELD

The disclosure relates generally to gear selection control of a vehicle powertrain. In particular aspects, the disclosure relates to a computer system comprising processing circuitry configured to control gear selection of a powertrain of a vehicle, a powertrain for a vehicle, a vehicle, a computer-implemented method for controlling gear selection of a powertrain of a vehicle, a computer program product, and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A powertrain for a vehicle may comprise two or more separate power units for providing propulsion force. In some examples, at least one of the power units may be an electric machine. The power units may be drivingly connected to a common shiftable transmission via a respective input shaft. Power is thereby transferrable from the respective power unit via the shiftable transmission to an output shaft which is drivingly connected to at least one drive wheel of the vehicle.

There is a strive to develop improved technology relating to powertrains comprising two or more power units, such as to improve a take-off situation when the vehicle starts driving from a stationary state or from a substantially stationary state.

### SUMMARY

According to a first aspect of the disclosure, a computer system comprising processing circuitry configured to control gear selection of a powertrain of a vehicle is provided. The powertrain comprises:
- a first power unit and a second power unit,
- a shiftable transmission which is shiftable between a plurality of gears with different gear ratios, wherein the shiftable transmission comprises a first and a second input shaft, and wherein the first input shaft is configured to be drivingly connected to the first power unit and the second input shaft is configured to be drivingly connected to the second power unit,
- a range gear arrangement which is shiftable between at least a low range gear state and a high range gear state, wherein a gear ratio of the range gear arrangement in the low range gear state is higher than a gear ratio of the range gear arrangement in the high range gear state, wherein the range gear arrangement is configured to be drivingly connected to the shiftable transmission such that the shiftable transmission and the range gear arrangement together provides a set of low range gears and a set of high range gears, and wherein the powertrain is configured such that shifting the range gear arrangement between the low range gear state and the high range gear state results in a power transfer interruption,
wherein the processing circuitry is further configured to, for a take-off situation of the vehicle:
- select a first high range gear from the set of high range gears when an achievable acceleration for the first high range gear is equal to or exceeds an acceleration limit.

The first aspect of the disclosure may seek to provide improved gear selection control of a powertrain as disclosed herein. A technical benefit may include that unwanted or unnecessary power transfer interruptions during the take-off situation are avoided, or at least reduced. This is since a high range gear is selected when the achievable acceleration for the high range gear is equal to or exceeds an acceleration limit, i.e., rather than selecting to take off with a low range gear from the set of low range gears. By the gear selection control as disclosed herein, smoother take-off may be achieved, e.g., by avoiding jerks caused by a power transfer interruption. This may also result in improved drivability.

An input shaft of the range gear arrangement may be configured to be drivingly connected to an output shaft of the shiftable transmission.

By being configured to be drivingly connected as disclosed herein may mean that a permanent driving connection may be used or that the driving connection may be arranged to be selectively drivingly connected and disconnected. Accordingly, in some examples, a clutch member may be used for selectively drivingly connecting and disconnecting the driving connection.

Any gear ratio as disclosed herein may also be denoted a speed ratio, and means a gear or speed ratio as seen in a direction along a torque/power path from the first/second power unit to an output shaft of the range gear arrangement.

A take-off situation as disclosed herein means a situation when the vehicle initiates driving from a stationary state, or from a substantially stationary state, such as when the vehicle is driving at a speed being below 5, 4, 3, 2, or 1 km/h. Accordingly, to select the first high range gear for the take-off situation means that the first high range gear is selected to be used to initiate driving from the stationary state, or the substantially stationary state.

To select a gear as disclosed herein preferably means to set the powertrain in a state with the selected gear engaged.

The plurality of gears of the shiftable transmission may be arranged such that a gear ratio of the shiftable transmission is lowered stepwise when shifting, e.g., when shifting up, from one gear to a subsequent gear. Accordingly, by way of example, when shifting down, the shiftable transmission may be arranged such that a gear ratio of the shiftable transmission is increased stepwise when shifting.

Optionally in some examples, including in at least one preferred example, the achievable acceleration for the first high range gear is a maximum achievable acceleration for the first high range gear. A technical benefit may include that a more appropriate gear is selected to be used for initiating the take-off situation.

Optionally in some examples, including in at least one preferred example, the first high range gear of the set of high range gears is a gear with a highest gear ratio of the set of high range gears. A technical benefit may include that a lowest high range gear is selected, thereby allowing the shiftable transmission to continue shifting through the following high range gears during the take-off situation.

Optionally in some examples, including in at least one preferred example, the processing circuitry is further configured to determine the achievable acceleration for the first high range gear based on any one or any combination of vehicle characteristics information, ambient conditions information, and drive mode information. A technical benefit may include that an improved determined value of the achievable acceleration is achieved. This is since taking any one or any combination of the aforementioned factors into account may provide a more realistic value of the achievable acceleration. This may result in a more appropriate gear selection for the take-off situation. Additionally or alternatively, the achievable acceleration may be a predetermined achievable acceleration.

Optionally in some examples, including in at least one preferred example, the acceleration limit is variable and the processing circuitry is further configured to select the acceleration limit based on any one or any combination of vehicle characteristics information, ambient conditions information, and drive mode information. A technical benefit may include that a more appropriate acceleration limit is used for the take-off situation. This is since taking any one or any combination of the aforementioned factors into account may provide an acceleration limit which is more appropriate for the current situation. This may result in a more appropriate gear selection for the take-off situation.

Optionally in some examples, including in at least one preferred example, the vehicle characteristics information comprises any one or a combination of:
- vehicle weight information,
- power capability information of at least one of the first and second power units,
- torque and/or speed limitation(s) information of at least one shaft of the powertrain,
- torque and/or speed capability information of at least one of the first and second power units,
- efficiency level information of the plurality of gears with different gear ratios, and
- tire pressure information.

A technical benefit may include that an improved determined value of the achievable acceleration is achieved and/or that a more appropriate acceleration limit is used for the take-off situation.

Optionally in some examples, including in at least one preferred example, the ambient conditions information comprises any one or any combination of:
- road inclination,
- roll resistance,
- ambient temperature, and
- air drag.

A technical benefit may include that an improved determined value of the achievable acceleration is achieved and/or that a more appropriate acceleration limit is used for the take-off situation.

Optionally in some examples, including in at least one preferred example, the drive mode information comprises at least two different drive modes from a selection of a performance drive mode, an efficiency drive mode and a standard drive mode. A technical benefit may include that an improved determined value of the achievable acceleration is achieved and/or that a more appropriate acceleration limit is used for the take-off situation.

Optionally in some examples, including in at least one preferred example, the acceleration limit is indicative of a maximum desired acceleration during the take-off situation. A technical benefit may include that a more appropriate gear is selected to be used for initiating the take-off situation.

Optionally in some examples, including in at least one preferred example, the acceleration limit is predetermined. A technical benefit may include that reduced processing power is required, i.e., a reduced need of using processing power for calculating an acceleration limit. This also implies faster execution for gear selection and a more cost-effective configuration.

Optionally in some examples, including in at least one preferred example, the processing circuitry is further configured to, for the take-off situation:
- select a first low range gear from the set of low range gears when the achievable acceleration for the first high range gear is lower than the acceleration limit, when the first high range gear of the set of high range gears is a gear with a highest gear ratio of the set of high range gears.

A technical benefit may include that an appropriate gear is selected for the take-off situation. Accordingly, to select the first low range gear for the take-off situation means that the first low range gear is selected to be used to initiate driving from the stationary state, or the substantially stationary state.

Optionally in some examples, including in at least one preferred example, the first low range gear of the set of low range gears is a gear with a lowest gear ratio of the set of low range gears with an achievable acceleration which is equal to or exceeds the acceleration limit. A technical benefit may include that fewer gear changes may be required for reaching a desired cruising speed.

Optionally in some examples, including in at least one preferred example, the processing circuitry is configured to, during the take-off situation, select to continue using a high range gear of the set of high range gears as long as an achievable acceleration for the high range gear is equal to or exceeds the acceleration limit and select a low range gear of the set of low range gears when it is determined that an achievable acceleration of any high range gear of the set of high range gears is lower than the acceleration limit. A technical benefit may include that, during the take-off situation when the vehicle has initiated driving from a stationary or substantially stationary state, gears are selected such that the acceleration limit is reached even when any high range gear is not able to reach the acceleration limit, i.e. when any one of all high range gears are not able to reach the acceleration limit. This situation may for example occur if a road inclination suddenly increases after the vehicle has initiated driving from the stationary state. However, if an achievable acceleration of any high range gear is equal to or exceeds the acceleration limit, the high range gear is selected and used, thereby avoiding any unwanted power transfer interruptions,

Optionally in some examples, including in at least one preferred example, the processing circuitry is further configured to select to continue using a high range gear of the set of high range gears when an achievable acceleration for the high range gear is lower than the acceleration limit and deviates from the acceleration limit by a predetermined tolerance value. A technical benefit may include that unnecessary downshifts to a low range gear are avoided.

According to a second aspect of the disclosure, a powertrain for a vehicle is provided. The powertrain comprises:
- a first power unit and a second power unit,
- a shiftable transmission which is shiftable between a plurality of gears with different gear ratios, wherein the shiftable transmission comprises a first and a second input shaft, and wherein the first input shaft is configured to be drivingly connected to the first power unit and the second input shaft is configured to be drivingly connected to the second power unit,
- a range gear arrangement which is shiftable between at least a low range gear state and a high range gear state, wherein a gear ratio of the range gear arrangement in the low range gear state is higher than a gear ratio of the range gear arrangement in the high range gear state, wherein the range gear arrangement is configured to be drivingly connected to the shiftable transmission such that the shiftable transmission and the range gear arrangement together provides a set of low range gears and a set of high range gears, and wherein the powertrain is configured such that shifting the range gear arrangement between the low range gear state and the high range gear state results in a power transfer interruption, and
wherein the powertrain further comprises a computer system according to any example of first aspect of the disclosure.

The second aspect of the disclosure may seek to provide a powertrain with improved gear selection control. A technical benefit may include that unwanted or unnecessary power transfer interruptions during the take-off situation are avoided, or at least reduced. Advantages and technical benefits of the powertrain according to the second aspect of the disclosure are analogous to the advantages and technical benefits of the first aspect of the disclosure.

Optionally in some examples, including in at least one preferred example, the shiftable transmission is configured such that, during a shifting operation of the shiftable transmission, power from one of the first and second power units can be transferred through the shiftable transmission and power from the other one of the first and second power units is prevented from being transferred through the shiftable transmission. A technical benefit may include that power can be transferred from one of the power units during the shifting operation, thereby avoiding a complete power transfer interruption.

According to a third aspect of the disclosure, a vehicle is provided. The vehicle comprises a powertrain according to any example of the second aspect of the disclosure. Advantages and technical benefits of the vehicle according to the third aspect of the disclosure are analogous to the advantages and technical benefits of the first and second aspects of the disclosure.

According to a fourth aspect of the disclosure, a computer-implemented method for controlling gear selection of a powertrain of a vehicle is provided. The powertrain comprises:
- a first power unit and a second power unit,
- a shiftable transmission which is shiftable between a plurality of gears with different gear ratios, wherein the shiftable transmission comprises a first and a second input shaft, and wherein the first input shaft is configured to be drivingly connected to the first power unit and the second input shaft is configured to be drivingly connected to the second power unit,
- a range gear arrangement which is shiftable between at least a low range gear state and a high range gear state, wherein a gear ratio of the range gear arrangement in the low range gear state is higher than a gear ratio of the range gear arrangement in the high range gear state, wherein the range gear arrangement is configured to be drivingly connected to the shiftable transmission such that the shiftable transmission and the range gear arrangement together provides a set of low range gears and a set of high range gears, and wherein the powertrain is configured such that shifting the range gear arrangement between the low range gear state and the high range gear state results in a power transfer interruption,
wherein the method comprises, for a take-off situation of the vehicle:
- selecting, by processing circuitry of a computer system, a first high range gear from the set of high range gears when an achievable acceleration for the first high range gear is equal to or exceeds an acceleration limit.

Advantages and technical benefits of the method according to the fourth aspect of the disclosure are analogous to the advantages and technical benefits of the first, second and third aspects of the disclosure.

Optionally in some examples, including in at least one preferred example, the achievable acceleration for the first high range gear is a maximum achievable acceleration for the first high range gear.

Optionally in some examples, including in at least one preferred example, the first high range gear of the set of high range gears is a gear with a highest gear ratio of the set of high range gears.

Optionally in some examples, including in at least one preferred example, the method further comprises, determining, by the processing circuitry, the achievable acceleration for the first high range gear based on any one or any combination of vehicle characteristics information, ambient conditions information, and drive mode information.

Optionally in some examples, including in at least one preferred example, the acceleration limit is variable and the method further comprises, by the processing circuitry, selecting the acceleration limit based on any one or any combination of vehicle characteristics information, ambient conditions information, and drive mode information.

Optionally in some examples, including in at least one preferred example, the vehicle characteristics information comprises any one or a combination of:
- vehicle weight information,
- power capability information of at least one of the first and second power units,
- torque and/or speed limitation(s) information of at least one shaft of the powertrain,
- torque and/or speed capability information of at least one of the first and second power units,
- efficiency level information of the plurality of gears with different gear ratios, and
- tire pressure information.

Optionally in some examples, including in at least one preferred example, the ambient conditions information comprises any one or any combination of:
- road inclination,
- roll resistance,
- ambient temperature, and
- air drag.

Optionally in some examples, including in at least one preferred example, the drive mode information comprises at least two different drive modes from a selection of a performance drive mode, an efficiency drive mode and a standard drive mode

Optionally in some examples, including in at least one preferred example, the acceleration limit is indicative of a maximum desired acceleration during the take-off situation.

Optionally in some examples, including in at least one preferred example, the acceleration limit is predetermined.

Optionally in some examples, including in at least one preferred example, the method further comprises, for the take-off situation:
- selecting, by the processing circuitry, a first low range gear from the set of low range gears when the achievable acceleration for the first high range gear is lower than the acceleration limit, when the first high range gear of the set of high range gears is a gear with a highest gear ratio of the set of high range gears.

Optionally in some examples, including in at least one preferred example, the first low range gear of the set of low range gears is a gear with a lowest gear ratio of the set of low range gears with an achievable acceleration which is equal to or exceeds the acceleration limit.

Optionally in some examples, including in at least one preferred example, the method further comprises, during the take-off situation, selecting, by the processing circuitry, to continue using a high range gear of the set of high range gears as long as an achievable acceleration for the high range gear is equal to or exceeds the acceleration limit, and selecting, by the processing circuitry, a low range gear of the set of low range gears when it is determined that an achievable acceleration of any high range gear of the set of high range gears is lower than the acceleration limit.

Optionally in some examples, including in at least one preferred example, the method further comprises, selecting, by the processing circuitry, to continue using a high range gear of the set of high range gears when an achievable acceleration for the high range gear is lower than the acceleration limit and deviates from the acceleration limit by a predetermined tolerance value.

According to a fifth aspect of the disclosure, a computer program is provided. The computer program comprises program code for performing, when executed by the processing circuitry, the method of any example of the fourth aspect of the disclosure.

According to a sixth aspect of the disclosure, a non-transitory computer-readable storage medium is provided. The non-transitory computer-readable storage medium comprises instructions, which when executed by the processing circuitry, cause the processing circuitry to perform the method of any example of the fourth aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2A** is an exemplary powertrain in a schematic view according to an example.
**FIG. 2B** is an exemplary powertrain in a schematic view according to an example.
**FIG. 3** is an exemplary scenario with a vehicle driving along a road section in a schematic view according to an example.
**FIG. 4** is an exemplary flowchart of a method according to an example.
**FIG. 5** is a schematic diagram of an exemplary computer system for implementing examples disclosed herein, according to an example

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

A powertrain for a vehicle may comprise two or more separate power units for providing propulsion force. In some examples, at least one of the power units may be an electric machine. In yet further examples, the powertrain may be a fully electric powertrain, i.e. all power units may be electric machines. In other examples, one of the power units may be an internal combustion engine.

It has been realized that power transfer interruptions during a take-off situation may occur for powertrains comprising more than one power unit, a shiftable transmission, and a range gear. This is since driving may be initiated from a stationary state with a selected low range gear, and when vehicle speed is increasing and the vehicle is accelerating to a desired cruising speed, the range gear may need to be shifted from its low range gear state to its high range gear state. This will result in an unavoidable power transfer interruption of the powertrain. In fact, the most intuitive manner of selecting a starting gear to be used when initiating driving is to select a gear with a high gear ratio, typically the gear with the highest gear ratio. By the gear selection control as disclosed herein, a starting gear may be selected such that a smoother take-off may be achieved when at least one specific criterion is fulfilled as disclosed herein. By way of example, jerks caused by a power transfer interruption may be avoided. As another example, the vehicle may reach its desired cruising speed in shorter time since acceleration may not be interrupted during the take-off situation. This may also result in improved drivability.

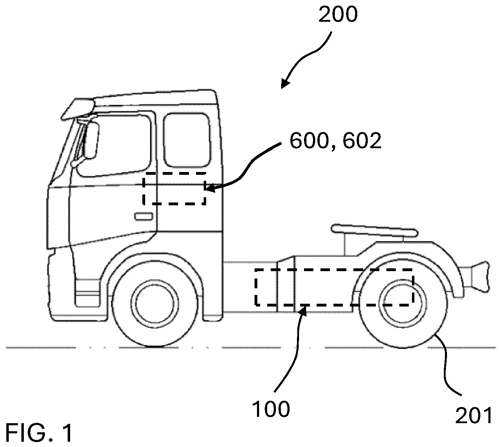

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a powertrain 100 according to an example disclosed herein. The powertrain 100 is drivingly connected to at least one drive wheel 201. The vehicle 200 further comprises a computer system 600 according to an example disclosed herein.

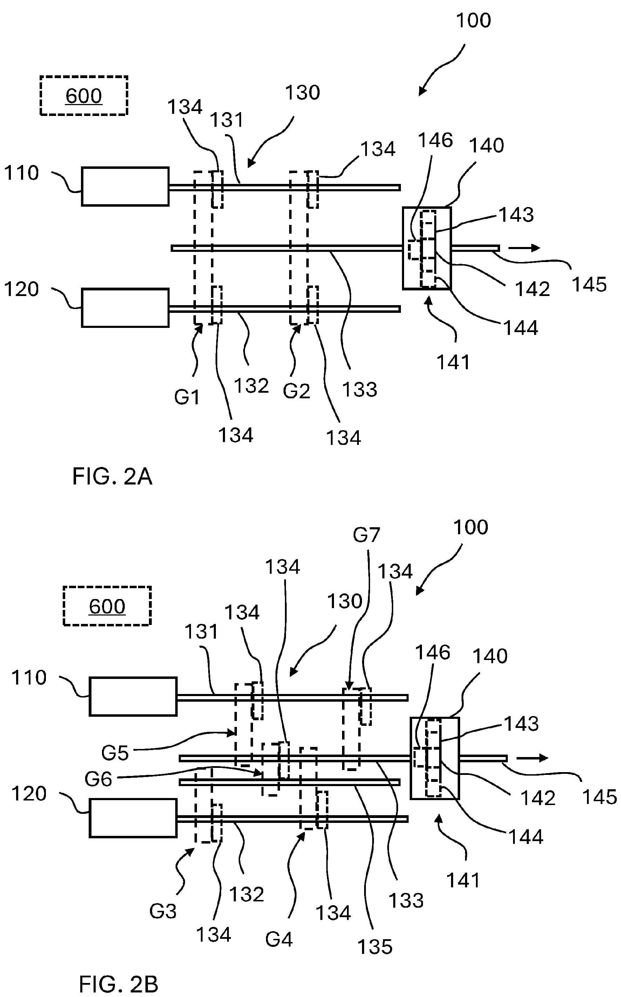

**FIG. 2A** is an exemplary powertrain 100 in a schematic view according to an example. The powertrain 100 in FIG. 2A may for example be used in the vehicle 200 shown in FIG. 1.

The powertrain 100 comprises a first power unit 110 and a second power unit 120. The first and second power units 110, 120 may for example be electric machines, e.g., to be used as a motor and/or a generator.

The powertrain 100 further comprises a shiftable transmission 130 which is shiftable between a plurality of gears with different gear ratios. The shiftable transmission 130 comprises a first and a second input shaft 131, 132. In the show example, the first input shaft 131 is drivingly connected to the first power unit 110 and the second input shaft 132 is drivingly connected to the second power unit 120. The driving connections may be permanent connections or connections which can be selectively connected and disconnected.

In the shown example, the first and second input shafts 131, 132 are arranged in parallel with each other. However, in other examples, the first and second input shafts may be angled relative each other.

The powertrain 100 further comprises a range gear arrangement 140 which is shiftable between at least a low range gear state and a high range gear state. The range gear arrangement 140 may be shiftable by use of at least one gear engaging device 146. A gear ratio of the range gear arrangement 140 in the low range gear state is higher than a gear ratio of the range gear arrangement 140 in the high range gear state. The range gear arrangement 140 preferably comprises a planetary gear set 141 which is shiftable between at least two states. For example, the range gear arrangement 140 may comprise one gear state with a direct 1:1 gear or speed ratio, corresponding to the high range gear state, and another gear state with a speed reduction corresponding to the low range gear state. The planetary gear set 141 may comprise a sun gearwheel 142, a planetary carrier 143 carrying one or more planetary gearwheels, and a ring gearwheel 144.

The range gear arrangement 140 further comprises an output shaft 145 of the range gear arrangement 140. The output shaft 145 of the range gear arrangement 140 is preferably drivingly connected to at least one drive wheel 201 of the vehicle 200.

The range gear arrangement 140 is configured to be drivingly connected to the shiftable transmission 130 such that the shiftable transmission and the range gear arrangement 140 together provides a set of low range gears and a set of high range gears. In the shown example, the shiftable transmission 130 comprises an output shaft 133 of the shiftable transmission 130 which is drivingly connected the range gear arrangement 140, e.g., rotationally fixed to the sun gearwheel 142. The set of low range gears comprises at least two low range gears and the set of high range gears comprises at least two high range gears. In some examples, the set of low range gears comprises more than two low range gears and the set of high range gears comprises more than two high range gears. By way of example, the shiftable transmission 130 may comprise at least three gears, such as four, five, six, seven or more gears.

In the shown example, the shiftable transmission 130 comprises at least two gear planes G1, G2. Each gear plane G1, G2 comprises two or more gearwheels which are drivingly connected for transferring power between the respective input shaft 131, 132 and the output shaft 133 of the shiftable transmission 130. The shiftable transmission 130 preferably comprises at least one gear engaging device 134 arranged to selectively engage and disengage a gear of the shiftable transmission 130. The at least one gear engaging device 134 may be a clutch, such as a dog clutch. The at least one gear engaging device 134 may also be configured to be set to a neutral state, so that power transfer via the respective gear plane G1, G2 is prevented.

The shiftable transmission 130 may be configured such that, during a shifting operation of the shiftable transmission 130, power from one of the first and second power units 110, 120 can be transferred through the shiftable transmission 130 and power from the other one of the first and second power units 110, 120 is prevented from being transferred through the shiftable transmission 130.

The powertrain 100 is further configured such that shifting the range gear arrangement 140 between the low range gear state and the high range gear state results in a power transfer interruption, i.e., so that power is prevented from being transferred from the power units 110, 120 to the output shaft 145 of the range gear arrangement 140. This may be accomplished by setting at least one gear engaging device to a neutral state so that power from the first and second power units 110, 120 is prevented from being transferred through the shiftable transmission 130 to the range gear arrangement 140.

**FIG. 2B** is an exemplary powertrain 100 in a schematic view according to another example. The powertrain 100 in FIG. 2B may for example be used in the vehicle 200 shown in FIG. 1.

The powertrain 100 in FIG. 2B is similar to the powertrain shown in FIG. 2A, with the difference that it also comprises a countershaft 135. The powertrain 100 is configured such that power may be transferred from at least one of the power units 110, 120 to the output shaft 133 of the shiftable transmission 130 via the countershaft 135. In the shown example, the shiftable transmission 130 comprises at least two gear planes G3-G7, configured similar to the above-mentioned gear planes. Each gear plane G3-G7 comprises two or more gearwheels which are drivingly connected for transferring power between the respective input shaft 131, 132 and the output shaft 133 of the shiftable transmission 130. At least one gear plane G3 comprises two or more gearwheels which are drivingly connected for transferring power between a respective input shaft 132 and the countershaft 135, and at least one gear plane G6 comprises two or more gearwheels which are drivingly connected for transferring power between the countershaft 135 and the output shaft 133 of the shiftable transmission 130.

The powertrain 100 as shown in FIG. 2A and 2B, respectively, further comprises a computer system 600, as e.g. also depicted in FIG. 1. The computer system 600 comprises processing circuitry 602 configured to control gear selection of the powertrain 100. Accordingly, the computer system 600 is preferably arranged to provide instructions to the shiftable transmission 130 and to the range gear arrangement 140, such as instructions to one or more actuators which are arranged to selectively engage and disengage the gear engaging devices 134, 146. By way of example, the one or more actuators may be electromechanical, pneumatic and/or hydraulic actuators.

The processing circuitry 602 is further configured to, for a take-off situation of the vehicle 200, select a first high range gear from the set of high range gears when an achievable acceleration for the first high range gear is equal to or exceeds an acceleration limit. Thereby, when the achievable acceleration for the first high range gear is equal to or exceeds the acceleration limit, the first high range gear is selected as a starting gear when initiating driving from a stationary state or from a substantially stationary state.

The achievable acceleration for the first high range gear may be a maximum achievable acceleration for the first high range gear.

The first high range gear of the set of high range gears may be a gear with a highest gear ratio of the set of high range gears.

The processing circuitry 602 may further be configured to determine the achievable acceleration for the first high range gear based on any one or any combination of vehicle characteristics information, ambient conditions information, and drive mode information.

The acceleration limit may be variable and the processing circuitry 602 may further be configured to select the acceleration limit based on any one or any combination of vehicle characteristics information, ambient conditions information, and drive mode information.

The vehicle characteristics information may comprise any one or a combination of:
- vehicle weight information,
- power capability information of at least one of the first and second power units 110, 120,
- torque and/or speed limitation(s) information of at least one shaft of the powertrain 100,
- torque and/or speed capability information of at least one of the first and second power units 110, 120,
- efficiency level information of the plurality of gears with different gear ratios, and
- tire pressure information.

By way of example, vehicle weight information may be obtained by data from a vehicle suspension system (not shown), i.e., vehicle weight may be estimated based on such data. Additionally, or alternatively, vehicle weight information may be obtained from a weight station for the vehicle 200. Additionally, or alternatively, vehicle weight information may be obtained from a database.

The ambient conditions information may comprise any one or any combination of:
- road inclination,
- roll resistance,
- ambient temperature, and
- air drag.

The ambient conditions information may e.g. be obtained by one or more sensors, and/or by data from a database. For example, road inclination may be measured by an on-board sensor, such as a gyroscope. Additionally, or alternatively, road inclination may be obtained from map data, e.g., by use of a navigation satellite system, such as GPS.

Road inclination may be estimated for the starting position P1 of the vehicle 200, from which it initiates driving, and optionally for a road section ahead of the vehicle 200. Accordingly, in some examples, the achievable acceleration may be determined for a road section ahead of the vehicle 200 along which the take-off situation will occur, e.g., until the vehicle 200 reaches a desired cruising speed.

The drive mode information may comprise at least two different drive modes from a selection of a performance drive mode, an efficiency drive mode and a standard drive mode. By way of example, in the performance drive mode, the powertrain 100 may be configured to utilize the maximum available power from the power units 110, 120. In another example, in the efficiency drive mode, the powertrain 100 may be configured to reduce power consumption so that less energy is consumed. In yet another example, in the standard drive mode, the powertrain 100 may be configured to compromise between performance and efficiency.

The acceleration limit may be indicative of a maximum desired acceleration during the take-off situation. In some examples, the acceleration limit may be set to a value in a range of 0.5-3 m/s², such as 1-2 m/s².

The acceleration limit may be predetermined.

The processing circuitry 602 may further be configured to, for the take-off situation, select a first low range gear from the set of low range gears when the achievable acceleration for the first high range gear is lower than the acceleration limit, when the first high range gear of the set of high range gears is a gear with a highest gear ratio of the set of high range gears.

The first low range gear of the set of low range gears may be a gear with a lowest gear ratio of the set of low range gears with an achievable acceleration which is equal to or exceeds the acceleration limit.

The processing circuitry 602 is configured to, during the take-off situation, select to continue using a high range gear of the set of high range gears as long as an achievable acceleration for the high range gear is equal to or exceeds the acceleration limit and select a low range gear of the set of low range gears when it is determined that an achievable acceleration of any high range gear of the set of high range gears is lower than the acceleration limit.

The processing circuitry 602 may further be configured to select to continue using a high range gear of the set of high range gears when an achievable acceleration for the high range gear is lower than the acceleration limit and deviates from the acceleration limit by a predetermined tolerance value. By way of example, the predetermined tolerance value may be in a range of 1-20 %, such as 1-10 % or 1-5 % of the acceleration limit.

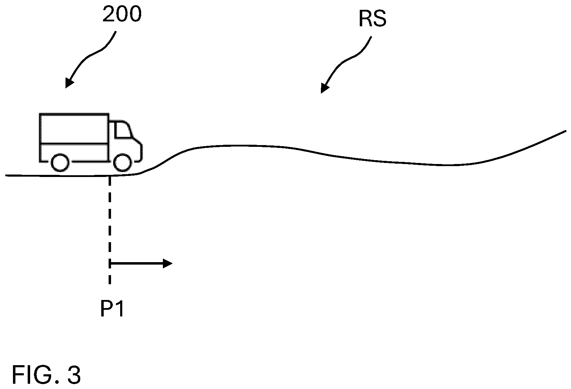

**FIG. 3** is an exemplary scenario with a vehicle 200 driving along a road section RS in a schematic view according to an example. The vehicle 200 in FIG. 3 may e.g. be the vehicle in FIG. 1 and/or comprise a powertrain 100 as shown in any one of FIGS. 2A-B. A road inclination of the road section RS may be determined, such as by use of map data and/or by an on-board sensor of the vehicle 200. The vehicle 200 is stationary at the position P1. A first high range gear from the set of high range gears is selected as starting gear from the position P1 when an achievable acceleration for the first high range gear is equal to or exceeds an acceleration limit. The achievable acceleration may be a maximum achievable acceleration for the first high range gear, taking e.g. the road inclination and/or vehicle weight into account as disclosed herein.

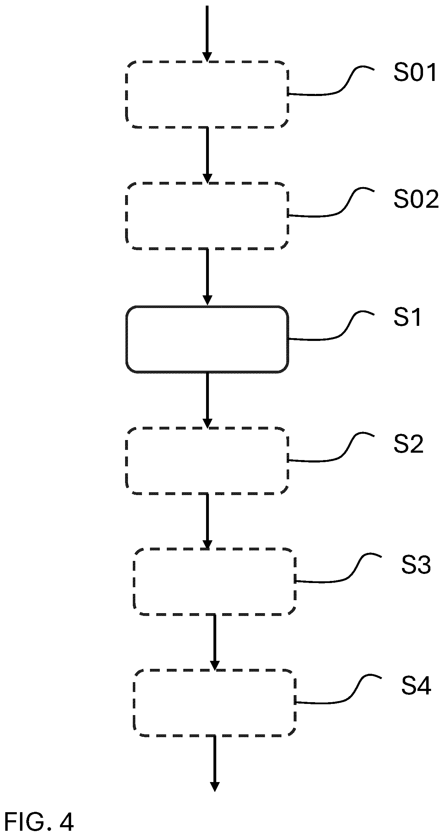

**FIG. 4** is an exemplary flowchart of a computer-implemented method according to an example. Boxes with dashed lines indicate that it is an optional action, i.e., in some examples one or more of the optional actions may be omitted. Actions of the method may be performed in any suitable order, unless explicitly stated otherwise. The method comprises, for a take-off situation of the vehicle 200:
S 1: selecting, by processing circuitry 602 of a computer system 600, a first high range gear from the set of high range gears when an achievable acceleration for the first high range gear is equal to or exceeds an acceleration limit.

The method may further comprise:
S01: determining, by the processing circuitry 602, the achievable acceleration for the first high range gear based on any one or any combination of vehicle characteristics information, ambient conditions information, and drive mode information. In some examples, the achievable acceleration may be determined for all gears.

The acceleration limit may be variable, and the method may further comprise:
S02: by the processing circuitry 602, selecting the acceleration limit based on any one or any combination of vehicle characteristics information, ambient conditions information, and drive mode information.

The method may further comprise, for the take-off situation:
S2: selecting, by the processing circuitry 602, a first low range gear from the set of low range gears when the achievable acceleration for the first high range gear is lower than the acceleration limit, when the first high range gear of the set of high range gears is a gear with a highest gear ratio of the set of high range gears.

The method may further comprise:
S3: during the take-off situation, selecting, by the processing circuitry 602, to continue using a high range gear of the set of high range gears as long as an achievable acceleration for the high range gear is equal to or exceeds the acceleration limit, and selecting, by the processing circuitry 602, a low range gear of the set of low range gears when it is determined that an achievable acceleration of any high range gear of the set of high range gears is lower than the acceleration limit

The method may further comprise:
S4: selecting, by the processing circuitry 602, to continue using a high range gear of the set of high range gears when an achievable acceleration for the high range gear is lower than the acceleration limit and deviates from the acceleration limit by a predetermined tolerance value.

By a "driving connection" between two rotating parts is herein intended that torque can be transmitted between the parts, and that the rotational speeds of the parts are proportional. When two gearwheels are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rotationally connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

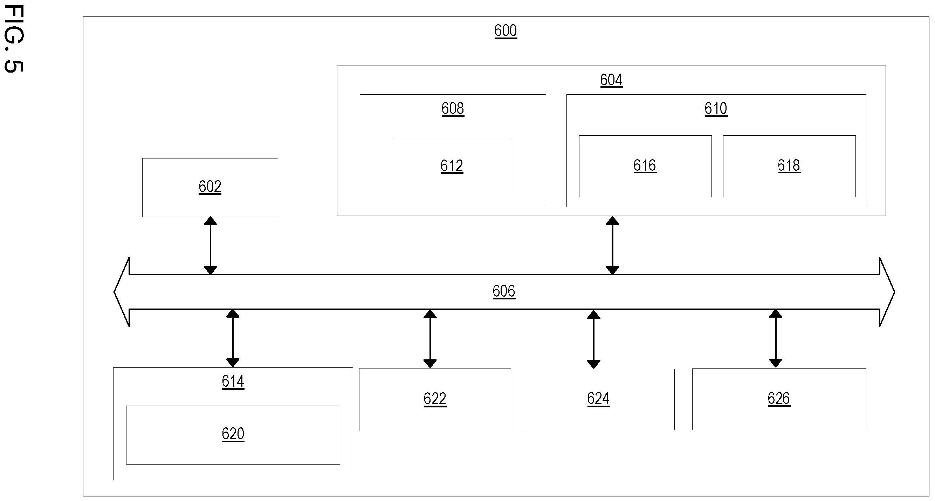

**FIG. 5** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the present disclosure are presented as a list of Examples:
Example 1: A computer system (600) comprising processing circuitry (602) configured to control gear selection of a powertrain (100) of a vehicle (200), wherein the powertrain (100) comprises:
   - a first power unit (110) and a second power unit (120),
   - a shiftable transmission (130) which is shiftable between a plurality of gears with different gear ratios, wherein the shiftable transmission (130) comprises a first and a second input shaft (131, 132), and wherein the first input shaft (131) is configured to be drivingly connected to the first power unit (110) and the second input shaft (132) is configured to be drivingly connected to the second power unit (120),
   - a range gear arrangement (140) which is shiftable between at least a low range gear state and a high range gear state, wherein a gear ratio of the range gear arrangement (140) in the low range gear state is higher than a gear ratio of the range gear arrangement (140) in the high range gear state, wherein the range gear arrangement (140) is configured to be drivingly connected to the shiftable transmission (130) such that the shiftable transmission (130) and the range gear arrangement (140) together provides a set of low range gears and a set of high range gears, and wherein the powertrain (100) is configured such that shifting the range gear arrangement (140) between the low range gear state and the high range gear state results in a power transfer interruption,
   wherein the processing circuitry (602) is further configured to, for a take-off situation of the vehicle (200):
   - select a first high range gear from the set of high range gears when an achievable acceleration for the first high range gear is equal to or exceeds an acceleration limit.
Example 2: The computer system (600) according to Example 1, wherein the achievable acceleration for the first high range gear is a maximum achievable acceleration for the first high range gear.
Example 3: The computer system (600) according to any one of the preceding Examples, wherein the first high range gear of the set of high range gears is a gear with a highest gear ratio of the set of high range gears.
Example 4: The computer system (600) according to any one of the preceding Examples, wherein the processing circuitry (602) is further configured to determine the achievable acceleration for the first high range gear based on any one or any combination of vehicle characteristics information, ambient conditions information, and drive mode information.
Example 5: The computer system (600) according to any one of the preceding Examples, wherein the acceleration limit is variable and wherein the processing circuitry (602) is further configured to select the acceleration limit based on any one or any combination of vehicle characteristics information, ambient conditions information, and drive mode information.
Example 6: The computer system (600) according to any one of Examples 4-5, wherein the vehicle characteristics information comprises any one or a combination of:
   - vehicle weight information,
   - power capability information of at least one of the first and second power units (110, 120),
   - torque and/or speed limitation(s) information of at least one shaft of the powertrain (100),
   - torque and/or speed capability information of at least one of the first and second power units (110, 120),
   - efficiency level information of the plurality of gears with different gear ratios, and
   - tire pressure information.
Example 7: The computer system (600) according to any one of Examples 4-6, wherein the ambient conditions information comprises any one or any combination of:
   - road inclination,
   - roll resistance,
   - ambient temperature, and
   - air drag.
Example 8: The computer system (600) according to any one of Examples 4-7, wherein the drive mode information comprises at least two different drive modes from a selection of a performance drive mode, an efficiency drive mode and a standard drive mode.
Example 9: The computer system (600) according to any one of the preceding Examples, wherein the acceleration limit is indicative of a maximum desired acceleration during the take-off situation.
Example 10: The computer system (600) according to any one of the preceding Examples, wherein the acceleration limit is predetermined.
Example 11: The computer system (600) according to any one of the preceding Examples, wherein the processing circuitry (602) is further configured to, for the take-off situation:
   - select a first low range gear from the set of low range gears when the achievable acceleration for the first high range gear according to Example 3 is lower than the acceleration limit.
Example 12: The computer system (600) according to Example 11, wherein the first low range gear of the set of low range gears is a gear with a lowest gear ratio of the set of low range gears with an achievable acceleration which is equal to or exceeds the acceleration limit.
Example 13: The computer system (600) according to any one of the preceding Examples, wherein the processing circuitry (602) is configured to, during the take-off situation, select to continue using a high range gear of the set of high range gears as long as an achievable acceleration for the high range gear is equal to or exceeds the acceleration limit and select a low range gear of the set of low range gears when it is determined that an achievable acceleration of any high range gear of the set of high range gears is lower than the acceleration limit.
Example 14: The computer system (600) according to Example 13, wherein the processing circuitry (602) is further configured to select to continue using a high range gear of the set of high range gears when an achievable acceleration for the high range gear is lower than the acceleration limit and deviates from the acceleration limit by a predetermined tolerance value.
Example 15: A powertrain (100) for a vehicle (200), wherein the powertrain (100) comprises:
   - a first power unit (110) and a second power unit (120),
   - a shiftable transmission (130) which is shiftable between a plurality of gears with different gear ratios, wherein the shiftable transmission (130) comprises a first and a second input shaft (131, 132), and wherein the first input shaft (131) is configured to be drivingly connected to the first power unit (110) and the second input shaft (132) is configured to be drivingly connected to the second power unit (120),
   - a range gear arrangement (140) which is shiftable between at least a low range gear state and a high range gear state, wherein a gear ratio of the range gear arrangement (140) in the low range gear state is higher than a gear ratio of the range gear arrangement (140) in the high range gear state, wherein the range gear arrangement (140) is configured to be drivingly connected to the shiftable transmission (130) such that the shiftable transmission and the range gear arrangement (140) together provides a set of low range gears and a set of high range gears, and wherein the powertrain (100) is configured such that shifting the range gear arrangement (140) between the low range gear state and the high range gear state results in a power transfer interruption, and
   wherein the powertrain (100) further comprises a computer system (600) according to any one of Examples 1-14.
Example 16: The powertrain (100) according to Example 15, wherein the shiftable transmission (130) is configured such that, during a shifting operation of the shiftable transmission (130), power from one of the first and second power units (110, 120) can be transferred through the shiftable transmission (130) and power from the other one of the first and second power units (110, 120) is prevented from being transferred through the shiftable transmission (130).
Example 17: A vehicle (200) comprising a powertrain (100) according to any one of Examples 15-16.
Example 18: A computer-implemented method for controlling gear selection of a powertrain (100) of a vehicle (200), wherein the powertrain (100) comprises:
   - a first power unit (110) and a second power unit (120),
   - a shiftable transmission (130) which is shiftable between a plurality of gears with different gear ratios, wherein the shiftable transmission (130) comprises a first and a second input shaft (131, 132), and wherein the first input shaft (131) is drivingly connected to the first power unit (110) and the second input shaft (132) is drivingly connected to the second power unit (120),
   - a range gear arrangement (140) which is shiftable between at least a low range gear state and a high range gear state, wherein a gear ratio of the range gear arrangement (140) in the low range gear state is higher than a gear ratio of the range gear arrangement (140) in the high range gear state, wherein the range gear arrangement (140) is drivingly connected to the shiftable transmission (130) such that the shiftable transmission (130) and the range gear arrangement (140) together provides a set of low range gears and a set of high range gears, and wherein the powertrain (100) is configured such that shifting the range gear arrangement (140) between the low range gear state and the high range gear state results in a power transfer interruption,
   wherein the method comprises, for a take-off situation of the vehicle (200):
   - selecting (S 1), by processing circuitry (602) of a computer system (600), a first high range gear from the set of high range gears when an achievable acceleration for the first high range gear is equal to or exceeds an acceleration limit.
Example 19: The method according to Example 18, wherein the achievable acceleration for the first high range gear is a maximum achievable acceleration for the first high range gear.
Example 20: The method according to any one of the Examples 18-19, wherein the first high range gear of the set of high range gears is a gear with a highest gear ratio of the set of high range gears.
Example 21: The method according to any one of Examples 18-20, further comprising, determining (S01), by the processing circuitry (602), the achievable acceleration for the first high range gear based on any one or any combination of vehicle characteristics information, ambient conditions information, and drive mode information.
Example 22: The method according to any one of Examples 18-21, wherein the acceleration limit is variable and wherein the method further comprises, by the processing circuitry (602), selecting the acceleration limit based on any one or any combination of vehicle characteristics information, ambient conditions information, and drive mode information.
Example 23: The method according to any one of Examples 21-22, wherein the vehicle characteristics information comprises any one or a combination of:
   - vehicle weight information,
   - power capability information of at least one of the first and second power units (110, 120),
   - torque and/or speed limitation(s) information of at least one shaft of the powertrain (100),
   - torque and/or speed capability information of at least one of the first and second power units (110, 120),
   - efficiency level information of the plurality of gears with different gear ratios, and
   - tire pressure information.
Example 24: The method according to any one of Examples 21-23, wherein the ambient conditions information comprises any one or any combination of:
   - road inclination,
   - roll resistance,
   - ambient temperature, and
   - air drag.
Example 25: The method according to any one of Examples 21-24, wherein the drive mode information comprises at least two different drive modes from a selection of a performance drive mode, an efficiency drive mode and a standard drive mode.
Example 26: The method according to any one of Examples 18-25, wherein the acceleration limit is indicative of a maximum desired acceleration during the take-off situation.
Example 27: The method according to any one of Examples 18-26, wherein the acceleration limit is predetermined.
Example 28: The method according to any one of Examples 18-27, further comprising, for the take-off situation:
   - selecting (S2), by the processing circuitry (602), a first low range gear from the set of low range gears when the achievable acceleration for the first high range gear according to Example 20 is lower than the acceleration limit.
Example 29: The method according to Example 28, wherein the first low range gear of the set of low range gears is a gear with a lowest gear ratio of the set of low range gears with an achievable acceleration which is equal to or exceeds the acceleration limit.
Example 30: The method according to any one of Examples 18-29, further comprising, during the take-off situation, selecting, by the processing circuitry (602), to continue using a high range gear of the set of high range gears as long as an achievable acceleration for the high range gear is equal to or exceeds the acceleration limit, and selecting, by the processing circuitry (602), a low range gear of the set of low range gears when it is determined that an achievable acceleration of any high range gear of the set of high range gears is lower than the acceleration limit.
Example 31: The method according to Example 30, further comprising, selecting, by the processing circuitry (602), to continue using a high range gear of the set of high range gears when an achievable acceleration for the high range gear is lower than the acceleration limit and deviates from the acceleration limit by a predetermined tolerance value.
Example 32: A computer program product comprising program code for performing, when executed by the processing circuitry, the method of any of Examples 18-31.
Example 33: A non-transitory computer-readable storage medium comprising instructions, which when executed by the processing circuitry, cause the processing circuitry to perform the method of any of Examples 18-31.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to control gear selection of a powertrain (100) of a vehicle (200), wherein the powertrain (100) comprises:
- a first power unit (110) and a second power unit (120),
- a shiftable transmission (130) which is shiftable between a plurality of gears with different gear ratios, wherein the shiftable transmission (130) comprises a first and a second input shaft (131, 132), and wherein the first input shaft (131) is configured to be drivingly connected to the first power unit (110) and the second input shaft (132) is configured to be drivingly connected to the second power unit (120),
- a range gear arrangement (140) which is shiftable between at least a low range gear state and a high range gear state, wherein a gear ratio of the range gear arrangement (140) in the low range gear state is higher than a gear ratio of the range gear arrangement (140) in the high range gear state, wherein the range gear arrangement (140) is configured to be drivingly connected to the shiftable transmission (130) such that the shiftable transmission (130) and the range gear arrangement (140) together provides a set of low range gears and a set of high range gears, and wherein the powertrain (100) is configured such that shifting the range gear arrangement (140) between the low range gear state and the high range gear state results in a power transfer interruption,
wherein the processing circuitry (602) is further configured to, for a take-off situation of the vehicle (200):
- select a first high range gear from the set of high range gears when an achievable acceleration for the first high range gear is equal to or exceeds an acceleration limit.

2. The computer system (600) according to claim 1, wherein the achievable acceleration for the first high range gear is a maximum achievable acceleration for the first high range gear.

3. The computer system (600) according to any one of the preceding claims, wherein the first high range gear of the set of high range gears is a gear with a highest gear ratio of the set of high range gears.

4. The computer system (600) according to any one of the preceding claims, wherein the processing circuitry (602) is further configured to determine the achievable acceleration for the first high range gear based on any one or any combination of vehicle characteristics information, ambient conditions information, and drive mode information.

5. The computer system (600) according to any one of the preceding claims, wherein the acceleration limit is variable and wherein the processing circuitry (602) is further configured to select the acceleration limit based on any one or any combination of vehicle characteristics information, ambient conditions information, and drive mode information.

6. The computer system (600) according to any one of claims 4-5, wherein the vehicle characteristics information comprises any one or a combination of:
- vehicle weight information,
- power capability information of at least one of the first and second power units (110, 120),
- torque and/or speed limitation(s) information of at least one shaft of the powertrain (100),
- torque and/or speed capability information of at least one of the first and second power units (110, 120),
- efficiency level information of the plurality of gears with different gear ratios, and
- tire pressure information.

7. The computer system (600) according to any one of claims 4-6, wherein the ambient conditions information comprises any one or any combination of:
- road inclination,
- roll resistance,
- ambient temperature, and
- air drag.

8. The computer system (600) according to any one of the preceding claims, wherein the acceleration limit is indicative of a maximum desired acceleration during the take-off situation.

9. The computer system (600) according to any one of the preceding claims, wherein the processing circuitry (602) is further configured to, for the take-off situation:
- select a first low range gear from the set of low range gears when the achievable acceleration for the first high range gear according to claim 3 is lower than the acceleration limit.

10. The computer system (600) according to claim 9, wherein the first low range gear of the set of low range gears is a gear with a lowest gear ratio of the set of low range gears with an achievable acceleration which is equal to or exceeds the acceleration limit.

11. The computer system (600) according to any one of the preceding claims, wherein the processing circuitry (602) is configured to, during the take-off situation, select to continue using a high range gear of the set of high range gears as long as an achievable acceleration for the high range gear is equal to or exceeds the acceleration limit and select a low range gear of the set of low range gears when it is determined that an achievable acceleration of any high range gear of the set of high range gears is lower than the acceleration limit.

12. The computer system (600) according to claim 11, wherein the processing circuitry (602) is further configured to select to continue using a high range gear of the set of high range gears when an achievable acceleration for the high range gear is lower than the acceleration limit and deviates from the acceleration limit by a predetermined tolerance value.

13. A powertrain (100) for a vehicle (200), wherein the powertrain (100) comprises:
- a first power unit (110) and a second power unit (120),
- a shiftable transmission (130) which is shiftable between a plurality of gears with different gear ratios, wherein the shiftable transmission (130) comprises a first and a second input shaft (131, 132), and wherein the first input shaft (131) is configured to be drivingly connected to the first power unit (110) and the second input shaft (132) is configured to be drivingly connected to the second power unit (120),
- a range gear arrangement (140) which is shiftable between at least a low range gear state and a high range gear state, wherein a gear ratio of the range gear arrangement (140) in the low range gear state is higher than a gear ratio of the range gear arrangement (140) in the high range gear state, wherein the range gear arrangement (140) is configured to be drivingly connected to the shiftable transmission (130) such that the shiftable transmission and the range gear arrangement (140) together provides a set of low range gears and a set of high range gears, and wherein the powertrain (100) is configured such that shifting the range gear arrangement (140) between the low range gear state and the high range gear state results in a power transfer interruption, and
wherein the powertrain (100) further comprises a computer system (600) according to any one of claims 1-12.

14. A vehicle (200) comprising a powertrain (100) according to claim 13.

15. A computer-implemented method for controlling gear selection of a powertrain (100) of a vehicle (200), wherein the powertrain (100) comprises:
- a first power unit (110) and a second power unit (120),
- a shiftable transmission (130) which is shiftable between a plurality of gears with different gear ratios, wherein the shiftable transmission (130) comprises a first and a second input shaft (131, 132), and wherein the first input shaft (131) is drivingly connected to the first power unit (110) and the second input shaft (132) is drivingly connected to the second power unit (120),
- a range gear arrangement (140) which is shiftable between at least a low range gear state and a high range gear state, wherein a gear ratio of the range gear arrangement (140) in the low range gear state is higher than a gear ratio of the range gear arrangement (140) in the high range gear state, wherein the range gear arrangement (140) is drivingly connected to the shiftable transmission (130) such that the shiftable transmission (130) and the range gear arrangement (140) together provides a set of low range gears and a set of high range gears, and wherein the powertrain (100) is configured such that shifting the range gear arrangement (140) between the low range gear state and the high range gear state results in a power transfer interruption,
wherein the method comprises, for a take-off situation of the vehicle (200):
- selecting (S 1), by processing circuitry (602) of a computer system (600), a first high range gear from the set of high range gears when an achievable acceleration for the first high range gear is equal to or exceeds an acceleration limit.
